# EUROPÄISCHE PATENTANMELDUNG

(11) **EP 4 807 926 A1**
(43) Veröffentlichungstag der Anmeldung: **16.09.2026**
(21) Anmeldenummer: 26158287.8
(22) Anmeldetag: 12.02.2026
(51) Int. Cl.: H02G 1/12, B26D 1/157, B26D 3/08, B26D 3/16

(54) **VORRICHTUNG UND VERFAHREN ZUM EINSCHNEIDEN EINER ISOLATIONSSCHICHT EINES LEITERS**

(30) Priorität: 13.03.2025 DE 102025109658
(71) Anmelder: Schaeffler Technologies AG & Co. KG, 91074 Herzogenaurach (DE)
(72) Erfinder: SCHNEIDER, Tom, 91074 Herzogenaurach (DE); RADWAINSKI, Matti, 91074 Herzogenaurach (DE); TORSTER, Tobias, 91074 Herzogenaurach (DE)
(74) Vertreter: Schaeffler Technologies

(57) **Zusammenfassung**

Die vorliegende Erfindung betrifft eine Vorrichtung (10) zum Einschneiden einer Isolationsschicht eines Leiters (12), umfassend
- eine Halteeinrichtung (14) zum Befestigen des mit der Isolationsschicht beschichteten Leiters (12), und
- eine rotatorisch gelagerte Rundklinge (16),
wobei die Vorrichtung (10) dazu ausgestaltet ist, dass die Rundklinge (16) und der in der Halteeinrichtung (14) befestigte Leiter (12) gegeneinander in der Form bewegbar sind, dass mittels der Rundklinge (16) ein umlaufender Einschnitt in die Isolationsschicht des Leiters (12) erzeugbar ist.

Zudem betrifft die vorliegende Erfindung ein Verfahren zum Einschneiden einer Isolationsschicht eines Leiters (12), bevorzugt mit der obigen Vorrichtung (10).

Zudem begrifft die vorliegende Erfindung die Verwendung der obigen Vorrichtung (10) oder des obigen Verfahrens zum Durchführen eines Prüfverfahrens für einen mit einer Isolationsschicht beschichteten Leiter (12), insbesondere zum Durchführen von Kapitel 6.6 einer Prüfung 8 der IEC 60851-3:2023.

## Beschreibung

Die vorliegende Erfindung betrifft eine Vorrichtung zum Einschneiden einer Isolationsschicht eines Leiters.

Weiterhin betrifft die vorliegende Erfindung ein Verfahren zum Einschneiden einer Isolationsschicht eines Leiters, bevorzugt mit der obigen Vorrichtung.

Zudem betrifft die Erfindung die Verwendung der obigen Vorrichtung oder des obigen Verfahrens zum Durchführen eines Prüfverfahrens bei einem mit einer Isolationsschicht beschichteten Leiter.

Elektrische Leiter mit einer Isolationsschicht, wie beispielsweise Flachdrähte, werden aufgrund ihrer Vielseitigkeit unter anderem in der Automobilindustrie eingesetzt. Flachdrähte werden dabei beispielsweise in Fahrzeugsystemen wie Motoren, Sensoren und bei Verdrahtungen genutzt. Die Qualität der Leiter ist entscheidend für die Leistungsfähigkeit und Zuverlässigkeit der elektrischen Komponenten, um eine sichere Energieübertragung und -verteilung zu gewährleisten.

Um zu prüfen, ob die Leiter den hohen Anforderungen gerecht werden und eine zuverlässige Leitung und Isolation bieten, wird unter anderem Kapitel 6.6 der Prüfung 8 der IEC 60851-3:2023 durchgeführt, insbesondere um die Haftung der Isolationsschicht nach der Dehnung des Leiters zu überprüfen. Dabei wird die Isolationsschicht vor der Dehnungsprüfung eingeschnitten, wobei beim Einschneiden darauf zu achten ist, dass die Isolationsschicht umlaufend durchtrennt wird, möglichst ohne den darunter liegenden Leiter zu beschädigen. Das Einschneiden erfolgt in der Regel von Hand mit einem scharfen Werkzeug. Anschließend wird der Leiter gedehnt, um zu überprüfen, ob die Isolierung fest am Leiter haftet oder sich ablöst.

Das Einschneiden von Hand hat den Nachteil, dass der Einschnitt wenig reproduzierbar ist und das Ergebnis der Haftprüfung somit stark von den Fähigkeiten der den Einschnitt durchführenden Person abhängt. Das Vorgehen weist demzufolge Verbesserungspotential auf.

Es ist die Aufgabe der vorliegenden Erfindung, wenigstens einen Nachteil des Stands der Technik zumindest teilweise zu überwinden. Es ist insbesondere eine Aufgabe der vorliegenden Erfindung, eine verlässliche und/oder reproduzierbare Prüfung eines Leiters zu ermöglichen. Weiterhin ist es Aufgabe der Erfindung das Einschneiden der Isolationsschicht des Leiters reproduzierbar, präzise und mit einem geringen Risiko den Leiter selbst zu beschädigen durchzuführen.

Die Lösung der vorliegenden Erfindung erfolgt durch eine Vorrichtung zum Einschneiden einer Isolationsschicht eines Leiters mit den Merkmalen des Anspruchs 1, einem Verfahren zum Einschneiden einer Isolationsschicht eines Leiters nach Anspruch 10 und einer Verwendung der obigen Vorrichtung oder des obigen Verfahrens nach Anspruch 12.

Erfindungsgemäß wird also eine Vorrichtung zum Einschneiden einer Isolationsschicht eines Leiters bereitgestellt, umfassend
- eine Halteeinrichtung zum Befestigen des mit der Isolationsschicht beschichteten Leiters, und
- eine rotatorisch gelagerte Rundklinge,
wobei die Vorrichtung dazu ausgestaltet ist, dass die Rundklinge und der in der Halteeinrichtung befestigte Leiter gegeneinander in der Form bewegbar sind, dass mittels der Rundklinge ein umlaufender Einschnitt in die Isolationsschicht des Leiters erzeugbar ist.

Weiterhin wird erfindungsgemäß ein Verfahren zum Einschneiden einer Isolationsschicht eines Leiters, bevorzugt mit der obigen Vorrichtung, bereitgestellt, umfassend die Schritte
- Befestigen des mit der Isolationsschicht beschichteten Leiters in einer Halteeinrichtung einer Vorrichtung, wobei die Vorrichtung eine rotatorisch gelagerte Rundklinge umfasst, und
- Erzeugen eines umlaufenden Einschnittes in die Isolationsschicht mittels der Rundklinge durch Herumführen des in der Halteeinrichtung befestigten Leiters um die Rundklinge, durch Drehen des in der Halteeinrichtung befestigten Leiters um eine Längsachse des Leiters, und/oder durch Herumführen der Rundklinge um den in der Halteeinrichtung befestigten Leiter.

Ein Aspekt der Erfindung ist also, dass die Vorrichtung die rotatorisch gelagerte Rundklinge aufweist, die zum Einschneiden der Isolationsschicht des in der Halteeinrichtung befestigten Leiters verwendet wird. Die Rundklinge ist bevorzugt freilaufend rotatorisch gelagert - sprich sie kann sich also zumindest in eine Drehrichtung frei um ihre Rotationsachse drehen. Es kann vorgesehen sein, dass die Rundklinge elektrisch antreibbar ist, wodurch sie durch Zufuhr von elektrischer Energie die Drehbewegung ausführt. Alternativ kann vorgesehen sein, dass die Rundklinge nicht elektrisch antreibbar ist, und sie händisch in Drehbewegung versetzt wird. Die Rundklinge ermöglicht ein präzises und reproduzierbares Einschneideergebnis. Insbesondere ermöglicht die Vorrichtung einen umlaufenden Einschnitt in die Isolationsschicht des Leiters, indem die Rundklinge und der in der Halteeinrichtung befestigte Leiter gegeneinander bewegbar sind. Unter gegeneinander bewegbar werden vorliegend Translationsbewegungen und/oder Rotationsbewegungen der Rundklinge und/oder des in der Halteeinrichtung befestigten Leiters verstanden, wobei dabei entweder nur eines der Bauteile bewegt wird oder beide Bauteile bewegt werden. Dabei kann vorgesehen sein, dass die Rundklinge beim Einschneiden im Wesentlichen keine Translationsbewegung durchführt und der in der Halteeinrichtung befestigte Leiter in einer kreisförmigen Bewegung um die Rundklinge herumgeführt wird. Weiterhin kann vorgesehen sein, dass die Rundklinge beim Einschneiden im Wesentlichen keine Translationsbewegung durchführt und der in Halteeinrichtung befestigte Leiter um seine Längsachse gedreht wird. Weiterhin kann vorgesehen sein, dass der in Halteeinrichtung befestigte Leiter beim Einschneiden im Wesentlichen keine Translationsbewegung durchführt und die Rundklinge in Umfangsrichtung um den Leiter herumgeführt wird. Zudem sind Mischformen der beschriebenen Bewegungsformen möglich.

Die Vorrichtung weist den Vorteil auf, dass derart umlaufende Einschnitte in die Isolationsschicht sehr präzise in rechtem Winkel zur Längserstreckung des Leiters durchführbar sind, was eine zuverlässige Prüfung der Haftung der Isolationsschicht ermöglicht.

Gemäß einer bevorzugten Weiterbildung der Erfindung ist vorgesehen, dass die Vorrichtung derart ausgestaltet ist, dass zum Erzeugen des umlaufenden Einschnittes der in der Halteeinrichtung befestigte Leiter um die Längsachse des Leiters drehbar ist. Dies vereinfacht den Aufbau der Vorrichtung, da der in der Halteeinrichtung befestigte Leiter während des Einschneidens keine Translationsbewegung durchführt. Stattdessen wird der Leiter um seine Längsachse gedreht.

In diesem Zusammenhang ist gemäß einer weiteren bevorzugten Weiterbildung der Erfindung vorgesehen, dass die Halteeinrichtung zum Drehen des in der Halteeinrichtung befestigten Leiters um die Längsachse des Leiters rotatorisch an einem Grundkörper der Vorrichtung gelagert ist. Bevorzugt wird also der Leiter mit der Halteeinrichtung gedreht. Die Lagerung der Halteeinrichtung erfolgt bevorzugt über Wälzlager am Grundkörper der Vorrichtung, da diese langlebig sowie wartungsarm sind und einen geringen Reibungswiederstand und hohe Präzision ermöglichen. Bevorzugt ist die Halteeinrichtung beidseitig der Rundklinge am Grundkörper rotatorisch gelagert, was einen robusten Aufbau ermöglicht und präzise rechtwinklig zur Längserstreckung des Leiters ausgeführte Einschnitte ermöglicht.

Gemäß einer weiteren bevorzugten Weiterbildung der Erfindung ist vorgesehen, dass die Vorrichtung derart ausgestaltet ist, dass während des Erzeugens des umlaufenden Einschnittes die Rundklinge der Vorrichtung mit einer gleichbleibenden Last ± 10%, bevorzugt ± 8% und besonders bevorzugt ± 5% auf die Isolationsschicht wirkt. Dies stellt insbesondere sicher, dass der Einschnitt über den Umfang des Leiters gleichmäßig ist. Bevorzugt ist weiterhin vorgesehen, dass die Last vordefinierbar ist und auf den Leiter und/oder die Isolationsschicht anpassbar ist.

Gemäß einer weiteren bevorzugten Weiterbildung der Erfindung ist vorgesehen, dass zum Erzeugen des umlaufenden Einschnittes die Rundklinge in Bezug zur Gravitation von oben auf den in der Halteeinrichtung befestigten Leiter einwirkt. Dies hat den Vorteil, dass die Last auf den Leiter über die Gravitationskraft erfolgt und somit durch Verwenden von unterschiedlichen Gewichten einstellbar ist. Alternativ ist es möglich, dass die gleichbleibende Last der Rundklinge auf Isolationsschicht mittels einer Feder erzeugt wird. Eine Feder kann auch verwendet werden, um die Gravitationskraft zu verstärken.

Gemäß einer weiteren bevorzugten Weiterbildung der Erfindung ist vorgesehen, dass die Vorrichtung einen zu dem in der Halteeinrichtung befestigten Leiter schwenkbar an dem Grundkörper der Vorrichtung gelagerten Klingenhalter umfasst. Dies ermöglicht auf einfache Weise, dass die Rundklinge beim Erzeugen des Einschnittes von oben auf den in der Halteeinrichtung befestigten Leiter einwirkt. Insbesondere ermöglicht die Schwenkbarkeit des Klingenhalters auch, dass bei Leitern mit nicht rotationssymmetrischem Umfang der nicht rotationssymmetrische Umfang beim Drehen des Leiters um seine Längsachse von einer Schwenkbewegung der Rundklinge kompensiert wird. Derart wird also auch auf einfache Weise sichergestellt, dass die auf den Leiter einwirkende Last beim Drehen des Leiters weitestgehend gleichbleibend ist, sprich sich nicht mehr als ± 10%, bevorzugt nicht mehr als ± 8% und besonders bevorzugt nicht mehr als ± 5% während des Einschneidens ändert. Der Klingenhalter kann zudem dazu verwendet werden, daran unterschiedliche Gewichte zu befestigen, um die auf den Leiter wirkende Last voreinzustellen.

In Bezug zur Halteeinrichtung ist gemäß einer weiteren bevorzugten Weiterbildung der Erfindung vorgesehen, dass die Halteeinrichtung einen Klemmblock und eine durch einen Achszapfen reichende Gewindeschraube zum einspannenden Befestigen des Leiters umfasst. Besonders bevorzugt weist die Halteeinrichtung ein Paar von Klemmblöcken und Gewindeschrauben auf, die jeweils bevorzugt durch die Achszapfen des Wälzlagers hindurchgehen und beidseitig der Rundklinge/Klingenhalters den Leiter fixieren. So ist eine sichere Befestigung des Leiters während des Einschneide-Vorganges gewährleistet.

Gemäß einer weiteren bevorzugten Weiterbildung der Erfindung ist vorgesehen, dass die Vorrichtung eine elektrische Kontaktierungseinrichtung umfasst, dergestalt, dass ein Signal erzeugt wird, sobald eine Kontaktierung der Rundklinge mit dem Leiter erfolgt. Derart lässt sich sicherstellen, dass der Leiter beim Einschneide-Vorgang möglichst wenig beansprucht wird. Weiterhin kann damit die vollständige Durchtrennung der Isolationsschicht überprüft werden. Besonders bevorzugt bilden also aufgrund der elektrischen Kontaktierungseinrichtung der Leiter und die Rundklinge einen Stromkreis, der geschlossen ist, sobald die Rundklinge durch die Isolationsschicht geschnitten hat und den Leiter elektrisch leitend kontaktiert. In anderen Worten wird also bevorzugt eine elektrische Durchgangsprüfung verwendet. Beim Signal kann es sich um ein elektrisches Signal, um ein optisches und/oder akustisches Signal handeln.

In Bezug zum Leiter ist gemäß einer weiteren bevorzugten Weiterbildung der Erfindung vorgesehen, dass der Leiter als Flachdraht ausgestaltet ist und/oder einen nicht kreisförmigen Umfang aufweist. Flachdrähte ermöglichen insbesondere in Motoren aufgrund ihrer flachen Form eine dichtere Packung, was die Raumausnutzung erhöht und Materialeinsparungen ermöglich. Zudem weisen Flachdrähte im Vergleich zu Runddrähten eine bessere Wärmeableitung auf und weisen tendenziell eine höhere mechanische Festigkeit auf. Zudem bieten Flachdrähte insbesondere in Anwendungen, bei denen hohe Stromdichten erforderlich sind, geringere elektrische Widerstände und somit eine verbesserte elektrische Leistungsfähigkeit.

Der Leiter ist weiter bevorzugt aus Kupfer, Aluminium und/oder aus einer Legierung davon. Die Isolationsschicht kann als eine Lackisolierung ausgestaltet sein. Alternativ kann es sich um eine Polymerbeschichtung beispielsweise aus Materialien wie Polyethylen, Polypropylen, Polyvinylchlorid, Polyamidimid (PAI), Polyethylenimin (PEI), Polyimide (PI) und/oder Polyetheretherketon (PEEK) handeln. Insbesondere PEEK wird aufgrund der guten thermischen und chemischen Beständigkeit sowie seiner mechanischen Eigenschaften in vielen anspruchsvollen Anwendungen wie in Hochvolt-Anwendungen über 800 V als Isolationsschicht verwendet.

Die beschriebene Vorrichtung eignet sich aufgrund ihrer Konstruktion besonders gut zum Einschneiden von Flachdrähten, wobei sich mittels der Vorrichtung präzise umlaufende Einschnitte der Isolationsschicht in einem rechten Winkel zur Längserstreckung des Leiters ohne Risiko den Leiter zu beschädigen erzielen lassen.

Weitere technische Merkmale, Effekte und Vorteile der Vorrichtung ergeben sich für den Fachmann unmittelbar aus der nachfolgenden Beschreibung des Verfahrens zum Einschneiden einer Isolationsschicht eines Leiters, der Verwendung der Vorrichtung und des Ausführungsbeispiels in der Figurenbeschreibung.

Wie bereits erwähnt betrifft die Erfindung weiterhin ein Verfahren zum Einschneiden einer Isolationsschicht eines Leiters, bevorzugt mit der oben beschriebenen Vorrichtung, umfassend die Schritte
- Befestigen des mit der Isolationsschicht beschichteten Leiters in der Halteeinrichtung der Vorrichtung, wobei die Vorrichtung die rotatorisch gelagerte Rundklinge umfasst, und
- Erzeugen des umlaufenden Einschnittes in die Isolationsschicht mittels der Rundklinge durch Herumführen des in der Halteeinrichtung befestigten Leiters um die Rundklinge, durch Drehen des in der Halteeinrichtung befestigten Leiters um die Längsachse des Leiters, und/oder durch Herumführen der Rundklinge um den in der Halteeinrichtung befestigten Leiter.

Bevorzugt wird der umlaufende Einschnitt erzeugt, indem der in der Halteeinrichtung befestigte Leiter besonders bevorzugt mit der Halteeinrichtung um die Längsachse des Leiters gedreht wird. Diese erfolgt bevorzugt manuell. Weiter bevorzugt ist dabei vorgesehen, dass nicht-rotationssymmetrische Umfänge des Leiters beim Drehen des Leiters durch eine Bewegung der Rundklinge, bevorzugt eine Schwenkbewegung, ausgeglichen werden.

Gemäß einer weiteren bevorzugten Weiterbildung der Erfindung ist vorgesehen, dass das Verfahren den Schritt Erzeugen eines Signales, sobald die Rundklinge mit dem Leiter in elektrischen Kontakt tritt, umfasst. Dies wird bevorzugt über die elektrische Kontaktierungseinrichtung ermöglicht. Derart kann einfach sichergestellt werden, dass die Isolationsschicht durchtrennt ist. Insbesondere wenn das Signal, beispielsweise ein optisches oder akustisches Signal innerhalb einer Drehung des Leiters um seine Längsachse durchgehend erzeugt wird, ist sichergestellt, dass die Isolationsschicht umlaufend eingeschnitten ist.

Das Verfahren hat den Vorteil, dass damit auf einfache Weise reproduzierbare Einschnitte in die Isolationsschicht des Leiters ermöglicht werden.

Weiterhin betrifft die Erfindung die Verwendung der oben beschriebenen Vorrichtung oder des oben beschriebenen Verfahrens zum Durchführen eines Prüfverfahrens für einen mit einer Isolationsschicht beschichteten Leiter, insbesondere zum Durchführen von Kapitel 6.6 einer Prüfung 8 der IEC 60851-3:2023. Die Verwendung der Vorrichtung und/oder des Verfahrens hat den Vorteil, dass das Ergebnis der Prüfung nicht von den Fähigkeiten derjenigen Person abhängt, die den Einschnitt der Isolationsschicht durchführt. Dementsprechend werden reproduzierbare Prüfergebnisse erzielt.

Die Erfindung ist nachfolgend anhand der Figuren weiter erläutert, wobei einzelne oder mehrere Merkmale der Figuren für sich oder in Kombination ein Merkmal der Erfindung sein können. Ferner sind die Figuren nur exemplarisch aber in keiner Weise beschränkend zu sehen.
Fig. 1 zeigt schematisch eine perspektivische Darstellung einer Vorrichtung zum Einschneiden einer Isolationsschicht eines Leiters gemäß einem bevorzugten Ausführungsbeispiel der Erfindung,
Fig. 2 zeigt schematisch eine perspektivische Schnittansicht durch die Vorrichtung der Figur 1,
Fig. 3 zeigt schematisch eine weitere Schnittansicht durch die Vorrichtung der Figur 1, und
Fig. 4 zeigt schematisch eine weitere Schnittansicht - orthogonal zur Ansicht in Figur 3 - durch die Vorrichtung der Figur 1.

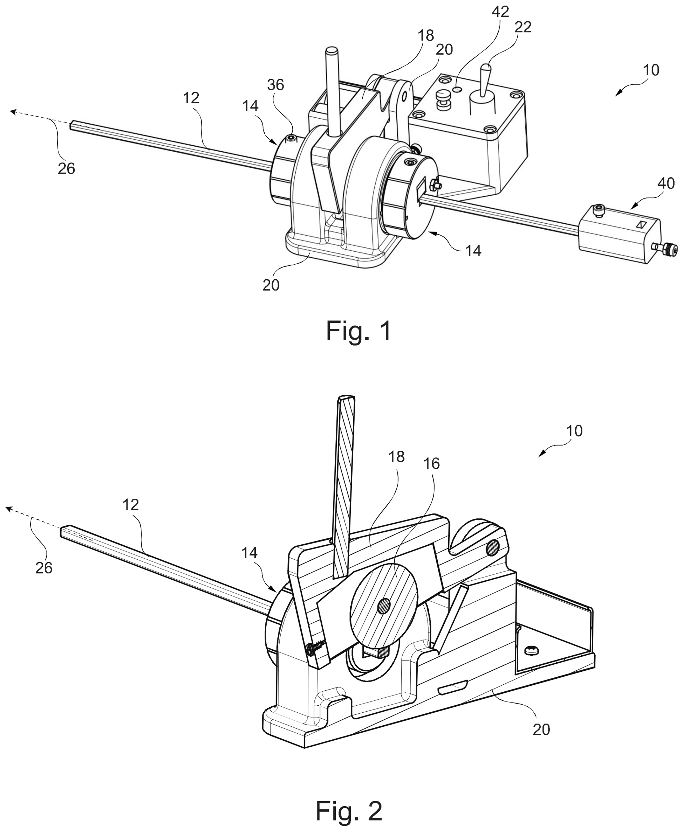

In der Figur 1 ist schematisch eine perspektivische Darstellung einer Vorrichtung 10 zum Einschneiden einer Isolationsschicht eines Leiters 12 gemäß einem bevorzugten Ausführungsbeispiel der Erfindung gezeigt. Weitere Schnittdarstellungen durch die Vorrichtung 10 sind in den Figuren 2 bis 4 gezeigt.

Die Vorrichtung 10 umfasst eine Halteeinrichtung 14 zum Befestigen des mit der Isolationsschicht beschichteten Leiters 12, und eine rotatorisch gelagerte Rundklinge 16. In Figur 1 ist die Rundklinge 16 selbst nicht ersichtlich, da sie von einem Klingenhalter 18 verdeckt wird, der an einem Grundkörper 20 der Vorrichtung 10 schwenkbar gelagert ist. In den Schnittdarstellungen in den Figuren 2 bis 4 ist die Rundklinge 16 aber ersichtlich. Die Rundklinge 16 ist im vorliegenden Ausführungsbeispiel freilaufend rotatorisch gelagert und nicht elektrisch antreibbar.

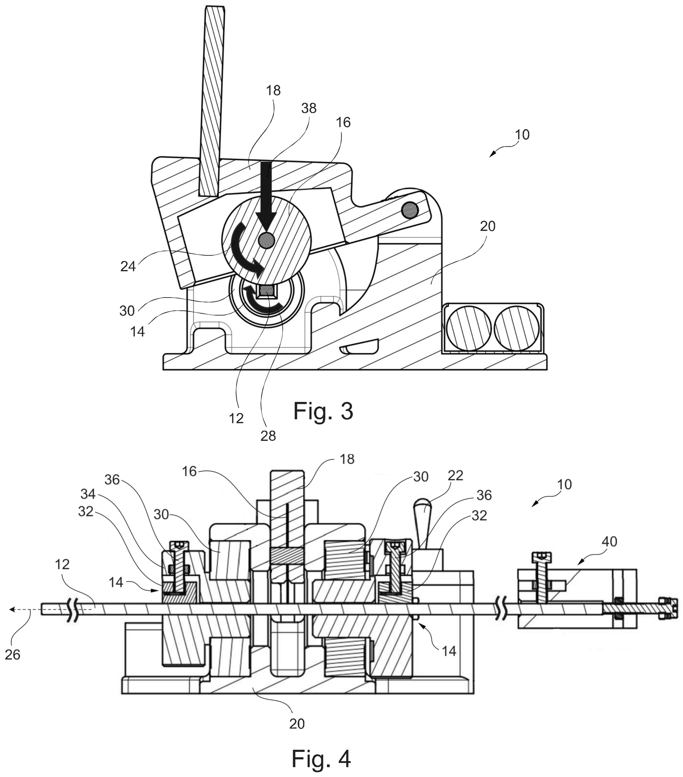

Im vorliegenden Ausführungsbeispiel ist der in der Halteeinrichtung 14 befestigte Leiter 12 um eine Längsachse 26 des Leiters 12 drehbar. Zum Drehen des in der Halteeinrichtung 14 befestigten Leiters 12 um die Längsachse 26 ist die Halteeinrichtung 14 rotatorisch an dem Grundkörper 20 gelagert, so dass also der Leiter 12 zusammen mit der Halteeinrichtung 14 drehbar ist, was schematisch in Figur 3 mit dem Pfeil 28 dargestellt ist. Die Lagerung der Halteeinrichtung 14 erfolgt vorliegend über Wälzlager 30 (siehe insbesondere Figur 4).

Ebenfalls ist gut in Figur 4 ersichtlich, dass die Halteeinrichtung 14 im vorliegenden Ausführungsbeispiel einen Klemmblock 32 und eine durch einen Achszapfen 34 des Wälzlagers 30 reichende Gewindeschraube 36 zum einspannenden Befestigen des Leiters 12 umfasst. Die Halteeinrichtung 14 ist als Paar ausgestaltet, das jeweils beidseitig der Rundklinge 16/des Klingenhalters 18 den Leiter 12 fixiert.

Entsprechend ermöglicht die Vorrichtung 10 einen umlaufenden Einschnitt in die Isolationsschicht des Leiters 12, indem die Rundklinge 16 und der in der Halteeinrichtung 14 befestigte Leiter 12 gegeneinander bewegbar sind, wobei beim Einschneiden der in Halteeinrichtung 14 befestigte Leiter 12 um seine Längsachse 26 gedreht wird. Das Drehen des in Halteeinrichtung 14 befestigten Leiters 12 erfolgt im vorliegenden Ausführungsbeispiel manuell. Durch die Drehung des in der Halteeinrichtung 14 befestigten Leiters 12 wird die auf der Isolationsschicht lastende Rundklinge 16 in eine Drehbewegung versetzt, wie in Figur 3 schematisch durch den Pfeil 24 angedeutet ist.

Die Rundklinge 16 wirkt beim Erzeugen des Einschnittes von oben auf den in der Halteeinrichtung 14 befestigten Leiter 12 ein, wobei aufgrund der Schwenkbarkeit des Klingenhalters 18, bei dem Leitern 12, der einen rechteckigen Querschnitt aufweist, der nicht rotationssymmetrische Umfang beim Drehen des Leiters 12 um die Längsachse 26 von der Schwenkbewegung der Rundklinge 16 kompensiert wird. Derart wird sichergestellt, dass die auf den Leiter 12 einwirkende Last, wie in Figur 3 mit dem Pfeil 38 schematisch angedeutet, beim Drehen des Leiters 12 weitestgehend gleichbleibend ist.

Weiterhin ist insbesondere in den Figuren 1 und 4 ersichtlich, dass die Vorrichtung 10 eine elektrische Kontaktierungseinrichtung 40 umfasst, dergestalt, dass ein Signal erzeugt wird, sobald eine Kontaktierung der Rundklinge 16 mit dem Leiter 12 erfolgt. Vorliegend fängt bei elektrischer Kontaktierung eine LED-Leuchte 42 an Licht zu emittieren. Um die Kontaktierungseinrichtung 40 in Betrieb zu nehmen, kann der Hauptschalter 22 betätigt werden.

Mit der Vorrichtung 10 lässt sich ein Verfahren zum Einschneiden der Isolationsschicht des Leiters 12 durchführen. Dafür wird in einem ersten Schritt der mit der Isolationsschicht beschichtete Leiter 12 in der Halteeinrichtung 14 befestigt. Danach wird ein umlaufender Einschnitt in die Isolationsschicht erzeugt mittels der Rundklinge 16 durch Drehen des in der Halteeinrichtung 14 befestigten Leiters 12 um die Längsachse 26 des Leiters 12. Das Drehen des Leiters 12 und damit das Erzeugen des umlaufenden Einschnittes wird so lange fortgeführt, bis durch die Kontaktierungseinrichtung 40 über den Zeitraum einer Umdrehung des Leiters 12 um seine Längsachse 26 ein durchgehendes Signal erzeugt wird.

### Bezugszeichenliste

- 10: Vorrichtung
- 12: Leiter
- 14: Halteeinrichtung
- 16: Rundklinge
- 18: Klingenhalter
- 20: Grundkörper
- 22: Hauptschalter
- 24: Pfeil, Drehbewegung der Rundklinge
- 26: Längsachse des Leiters
- 28: Pfeil, Drehbewegung Halteeinrichtung und Leiter
- 30: Wälzlager
- 32: Klemmblock
- 34: Achszapfen
- 36: Gewindeschraube
- 38: Pfeil, gleichbleibende Last
- 40: elektrische Kontaktierungseinrichtung
- 42: LED-Leuchte

## Patentansprüche

1. Vorrichtung (10) zum Einschneiden einer Isolationsschicht eines Leiters (12), umfassend
- eine Halteeinrichtung (14) zum Befestigen des mit der Isolationsschicht beschichteten Leiters (12), und
- eine rotatorisch gelagerte Rundklinge (16),
wobei die Vorrichtung (10) dazu ausgestaltet ist, dass die Rundklinge (16) und der in der Halteeinrichtung (14) befestigte Leiter (12) gegeneinander in der Form bewegbar sind, dass mittels der Rundklinge (16) ein umlaufender Einschnitt in die Isolationsschicht des Leiters (12) erzeugbar ist.

2. Vorrichtung (10) nach Anspruch 1, wobei die Vorrichtung (10) derart ausgestaltet ist, dass zum Erzeugen des umlaufenden Einschnittes der in der Halteeinrichtung (14) befestigte Leiter (12) um eine Längsachse (26) des Leiters (12) drehbar ist.

3. Vorrichtung (10) nach Anspruch 1 oder 2, wobei die Halteeinrichtung (14) zum Drehen des in der Halteeinrichtung (14) befestigten Leiters (12) um die Längsachse (26) des Leiters (12) rotatorisch an einem Grundkörper (20) gelagert ist.

4. Vorrichtung (10) nach einem der vorhergehenden Ansprüche, wobei die Vorrichtung (10) derart ausgestaltet ist, dass während des Erzeugens des umlaufenden Einschnittes die Rundklinge (16) der Vorrichtung (10) mit einer gleichbleibenden Last (38) ± 10%, bevorzugt ± 8%, und besonders bevorzugt ± 5% auf die Isolationsschicht wirkt.

5. Vorrichtung (10) nach einem der vorhergehenden Ansprüche, wobei die Vorrichtung (10) derart ausgestaltet ist, dass zum Erzeugen des umlaufenden Einschnittes die Rundklinge (16) in Bezug zur Gravitation von oben auf den in der Halteeinrichtung (14) befestigten Leiter (12) einwirkt.

6. Vorrichtung (10) nach einem der vorhergehenden Ansprüche, wobei die Vorrichtung (10) einen zu dem in der Halteeinrichtung (14) befestigten Leiter (12) schwenkbar an einem Grundkörper (30) gelagerten Klingenhalter (18) umfasst.

7. Vorrichtung (10) nach einem der vorhergehenden Ansprüche, wobei die Halteeinrichtung (14) einen Klemmblock (32) und eine durch einen Achszapfen (34) reichende Gewindeschraube (36) zum einspannenden Befestigen des Leiters (12) umfasst.

8. Vorrichtung (10) nach einem der vorhergehenden Ansprüche, wobei die Vorrichtung (10) eine elektrische Kontaktierungseinrichtung (40) umfasst, dergestalt, dass ein Signal erzeugt wird, sobald eine Kontaktierung der Rundklinge (16) mit dem Leiter (12) erfolgt.

9. Vorrichtung (10) nach einem der vorhergehenden Ansprüche, wobei der Leiter (12) als Flachdraht ausgestaltet ist und/oder einen nicht kreisförmigen Umfang aufweist.

10. Verfahren zum Einschneiden einer Isolationsschicht eines Leiters (12), bevorzugt mit einer Vorrichtung (10) nach einem der vorhergehenden Ansprüche, umfassend die Schritte
- Befestigen des mit der Isolationsschicht beschichteten Leiters (12) in einer Halteeinrichtung (14) einer Vorrichtung (10), wobei die Vorrichtung (10) eine rotatorisch gelagerte Rundklinge (16) umfasst, und
- Erzeugen eines umlaufenden Einschnittes in die Isolationsschicht mittels der Rundklinge (16) durch Herumführen des in der Halteeinrichtung (14) befestigten Leiters (12) um die Rundklinge (16), durch Drehen (28) des in der Halteeinrichtung (14) befestigten Leiters (12) um eine Längsachse (26) des Leiters (12), und/oder durch Herumführen der Rundklinge (16) um den in der Halteeinrichtung (14) befestigten Leiter (12).

11. Verfahren nach Anspruch 10, wobei das Verfahren den Schritt Erzeugen eines Signales, sobald die Rundklinge (16) mit dem Leiter (12) in elektrischen Kontakt tritt, umfasst.

12. Verwendung einer Vorrichtung (10) nach einem der Ansprüche 1 bis 9 oder des Verfahrens nach einem der Ansprüche 10 oder 11 zum Durchführen eines Prüfverfahrens bei einem mit einer Isolationsschicht beschichteten Leiter (12), insbesondere zum Durchführen von Kapitel 6.6 einer Prüfung 8 der IEC 60851-3:2023.
